# EUROPEAN PATENT APPLICATION

(11) **EP 1 852 686 A1**
(43) Date of publication of application: **07.11.2007**
(21) Application number: 06425302.4
(22) Date of filing: 03.05.2006
(51) Int. Cl.: G01F 11/26

(54) **Batching tap for granulated substances**

(71) Applicant: Bisio Progetti S.p.A, 15100 Alessandria (IT)
(72) Inventor: Bisio, Stefano c/o Bisio Progetti S.p.A., 15100 Alessandria (IT)
(74) Representative: Garavelli, Paolo

(57) **Abstract**

A batching tap (1) is described comprising a batching vessel (3) communicating with an inside of a vessel containing a granulated or powdery substance and connected through a hinge connection (5) to a closing member (7), such closing member (7) being integral with a delivering channel (9) communicating with the batching vessel (3), and the closing member (7) being adapted to rotate around the hinge connection (5) to be alternatively taken in a delivering position in which the delivering channel (9) communicates the batching vessel (3) with the vessel exterior or in a closing position in which the delivering channel (9) is not communicating with the vessel exterior and the closing member (7) insulates the vessel interior from the exterior.

## Description

The present invention refers to a batching tap for granulated substances.

As known, the granulated substances, being both for food use, such as for example sugar, coffee, salt, or aimed for other applications, are, in the majority of cases, offered in vessels equipped with a small beak which can be extracted from the vessel, through which it is possible to pour the substance.

It is clear however that, in such a way, the small beak allows continuously pouring the granulated substance, such characteristic being useful if one wishes to uncontrollably pour a great amount of product, while it could create some inconvenience when it is necessary to use limited and defined amounts of the substance itself: in this latter case, in fact, by using this type of vessels, in order to perform a more or less accurate batching of the product, it is necessary to rely in the sensitivity of the person who pour, or to use a separate batching device, such as for example a graduated vessel.

In order to solve such already known problem, the prior art has proposed a series of batching devices to be inserted in vessels with granulated or powdery substances, such as for example those disclosed in patents EP-A-0 662 296 and US-A-1 877 808. Such batching devices are generally equipped with a batching cup, communicating with the vessel interior through a series of slits and with the vessel exterior through a cannula or delivering channel arranged centrally over the batching cup itself. In such batching devices, however, when the delivering member must not be used, it is usually closed through a separate plug, thereby resulting scarcely practical when using the batching device itself.

Moreover, the known batching devices for granular substances are composed of a plurality of components which must be separately manufactured and joined together to be afterwards applied to the vessel for granular substances, thereby resulting scarcely practical and relatively costly from the manufacturing point of view.

Therefore, object of the present invention is solving the prior art problems by providing a batching tap for granulated or powdery substances which allows in an extremely practical way both closing the vessel on which it is applied, thereby protecting the substance inside it from dust, dirt or other elements which could impair hygiene and/or storage thereof, and delivering, when it is open, determined and measured doses of the substance, in which its delivering member is integrated in its closing member of the vessel itself.

Moreover, an object of the present invention is providing a batching tap for granulated or powdery substances which can be manufactured in a single piece.

The above and other objects and advantages of the invention, as will result from the following description, are obtained with a batching tap for granulated substances as claimed in claim 1. Preferred embodiments and non-trivial variations of the present invention are the subject matter of the dependent claims.

The present invention will be better described by some preferred embodiments thereof, provided as a non-limiting example, with reference to the enclosed drawings, in which:
- FIG. 1a shows a perspective view of a preferred embodiment of the batching tap according to the present invention in a delivering position;
- FIG. 1b shows a side sectional view of the batching tap of FIG. 1a;
- FIG. 2a shows a perspective view of the batching tap of the previous Figures in a closing position;
- FIG. 2b shows a sectional view of the batching tap of FIG. 2a;
- FIG. 3a shows a perspective view of the batching tap of the previous Figures in its preferred moulding position; and
- FIG. 3b shows a sectional view of the batching tap of FIG. 3a.

The batching tap according to the present invention is aimed to be inserted into a suitable sized opening obtained on the upper portion of a vessel (not shown) containing a granulated or powdery substance, both for food use, such as for example sugar, salt, minced spices, or aimed obviously to other applications, in such a way as to allow both its delivery, when it is taken in its delivery position, in determined and measured doses, and closing the vessel on which it is applied, when it is taken to its closing position, thereby protecting the substance inside it from dust, dirt or other elements which could impair hygiene and/or correct storage. Even if the Figures do not show the vessel on which the batching tap according to the present invention is arranged, the following description will implicitly refer to the operation of the batching tap as anyway inserted in a vessel with a granulated or powdery substance.

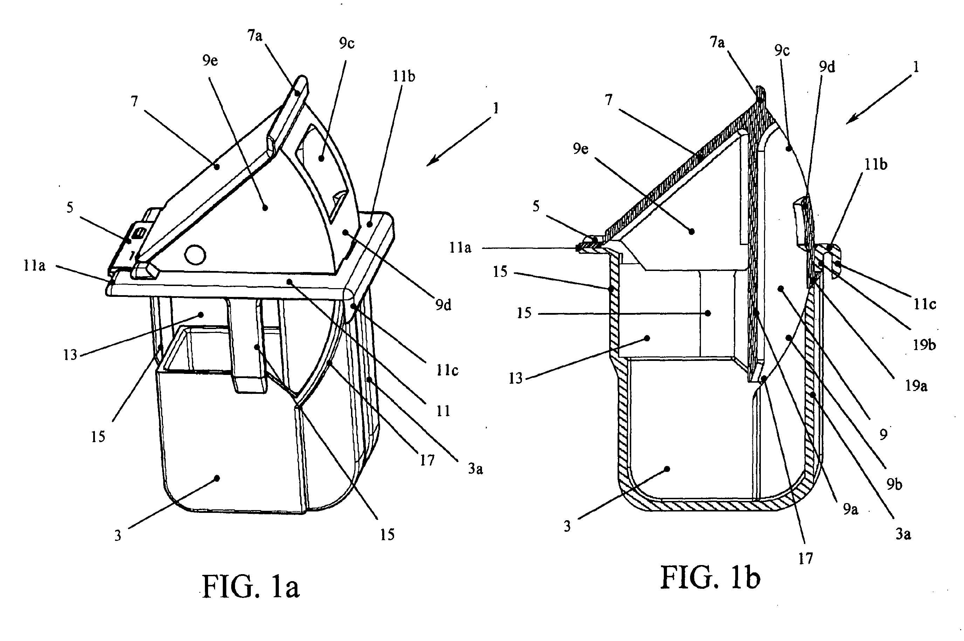

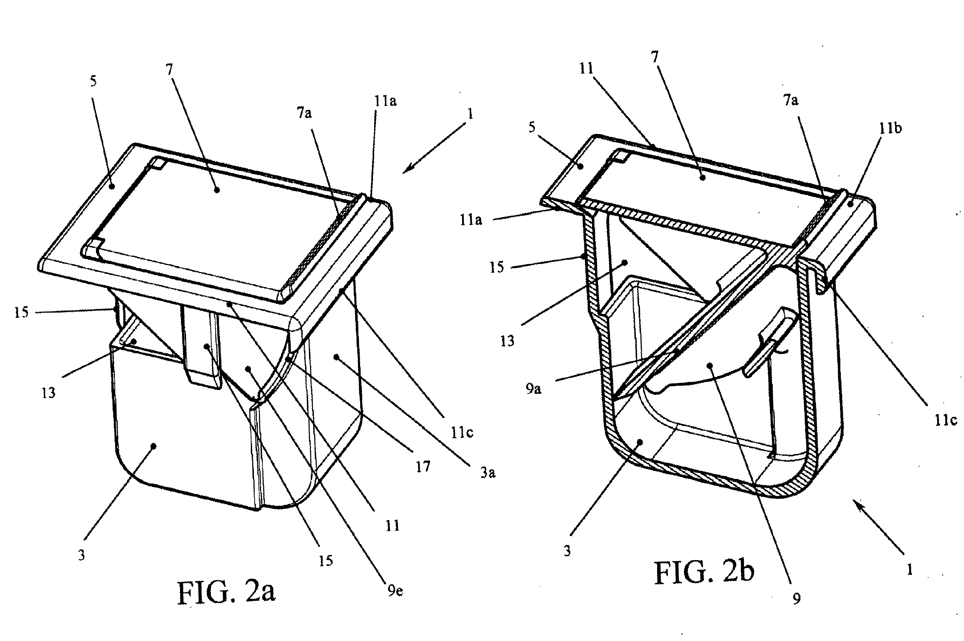

With reference then to the Figures, it is possible to note that the batching tap 1 according to the present invention comprises a batching vessel 3 in communication with the vessel interior with granulated or powdery substance and connected through a hinge connection 5 to a closing member 7, such closing member 7 being integral with a delivering channel 9 communicating with the batching vessel 3; the closing member 7 can be rotated around the hinge connection 5 to be alternatively brought to a delivering position (like the one shown in FIG. 1a and 1b) in which the delivering channel 9 communicates the batching vessel 3 with the vessel exterior or in a closing position (like the one shown in FIGG. 2a and 2b) in which the delivering channel 9 is not communicating with the vessel exterior and the closing member 7 insulates the vessel interior from the exterior.

Depending on the batching vessel 3 size, and consequently its capacity, it will be possible to define the determined and measured dose which the batching tap 1 is able to deliver.

In a preferred embodiment of the batching tap 1 according to the present invention, the hinge connection 5 is realised as at least one lamina made of elastic material with adequate thickness to allow an elastic flexure without breakage or the creation of too pronounced strictions which could impair the functional integrity.

In particular, the batching vessel 3 is connected to a securing frame 11, adapted to be overlapped to the edges of the vessel opening within which the tap 1 is inserted, by interposing at least one slit 13 which communicates the batching vessel 3 with the vessel interior. Should the batching tap 1 comprise a plurality of slits 13, the batching vessel 3 will be connected to the securing frame 11 through a number which is obviously adequate of ribs 15. To a first side 11a of the securing frame 11, therefore, the closing member 7 of the batching tap 1 is hinged, by interposing the hinge connection 5.

It is clear that the securing frame 11 must have external perimeter sizes which are greater than the vessel opening size, in order to prevent the tap 1 from falling inside the vessel. In particular, the securing frame 11 can be welded or glued through other similar means. Should the batching tap 1 have to be inserted next to a side wall of its vessel, the securing frame 11 can be equipped, next to a second side 1b opposite to the first side 11a, with a securing recess 11c adapted to house side wall.

The delivering channel 9 is defined by a longitudinal rear bulkhead 9a, by an arc-shaped front bulkhead 9d according to the curvature radium of the delivering channel 9 around the hinge connection 5 and by a pair of side bulkheads 9e laterally connected to the longitudinal rear bulkhead 9a and to the front bulkhead 9d to insulate the batching vessel 3 from outside when the batching tap 1 is in its delivering position, and to thereby constrain the substance contained inside the batching vessel 3 to go out only through the delivering channel 9 when the vessel is obviously inclined by a user thereof: the delivering channel 9 is therefore equipped at the two opposite ends thereof with at least one delivering opening 9c, preferably obtained on the front bulkhead 9d, communicating with the outside when the batching tap 1 is in its delivering position and with at least one lower inlet opening 9b communicating with the batching vessel 3.

It is clear that the internal perimeter of the securing frame 11 must define an opening 3d with such shape and sizes as to allow the passage inside it of the delivering channel 9 and the side bulkheads 9e when the closing member 7 rotates around the hinge connection 5 in its passage from the delivering position to the closing position and vice versa. Similarly, the external perimeter of the closing member 7 must be such as to completely overlap the opening 3d of the securing frame 11 in such a way as to insulate the vessel interior from the exterior when the batching tap 1 is in its closed position.

Along the internal sides of the batching vessel 3, it is possible to provide for the presence of sliding guides 17 of the delivering channel 9, and in particular of the front bulkhead 9d when the closing member 7 rotates around the hinge connection 5 in its passage from the delivering position to the closing position and vice versa. In particular, the front bulkhead 9d could be equipped with at least one stop tooth 19a adapted to abut against a limit device 19b (as shown in FIG. 1b) obtained along a front wall 3a of the batching vessel 3 and which prevents an excessive opening of the closing member 7 and therefore the delivering channel 9 from going out of the securing frame 11.

The use of the batching tap 1 according to the present invention is therefore extremely simple and practical: when it is located in the closing position shown in FIG. 2a e 2b, the granulated or powdery substance contained inside the vessel is insulated from the outside since the closing member 7 is overlapping the opening 11d of the securing frame 11; after having then inclined the vessel, it is possible to fill the batching vessel 3 with the granulated substance through the slits 13 (obviously the inclination amount will depend on the residual amount of the granulated substance inside the vessel) and taking back the vessel in a substantially vertical position, inside the batching vessel 3 there will remain the determined dose of substance to be delivered. It is now possible to take the batching tap 1 to its delivering position (like the one shown in FIG. 1a and 1b) lifting the closing member 7 and making it rotate around the hinge connection 5 till the delivering opening 9c has not gone out of the securing frame 11 or the stop tooth 19a has not abutted against the limit device 19b: in order to favour opening of the batching tap 1, the closing member 7 could be equipped with a raised edge 7a on which a grip could be easily made with the fingers; by inclining again the vessel, the dose of substance contained inside the batching vessel 3 will go outside through the lower inlet opening 9b, the delivering channel 9 and the delivering opening 9c.

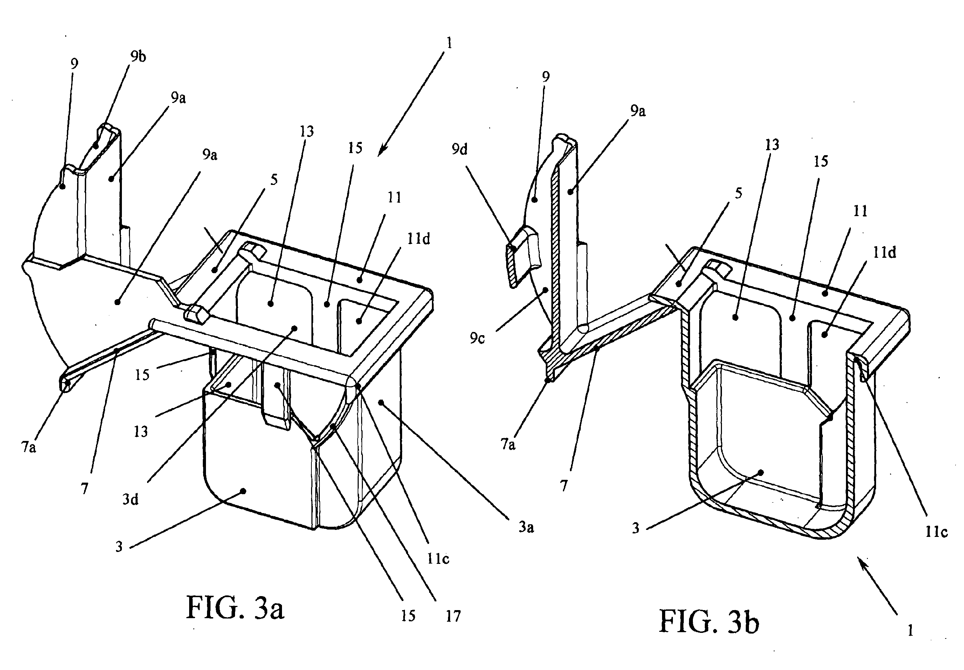

Advantageously, the whole batching tap 1 according to the present invention, and consequently each of the parts composing it as previously described, could be all made of the same material, such as, for example, a plastic material. According to this last variation, it is still more advantageous that the batching tap 1 according to the present invention can be produced, for example through injection moulding, in a single piece, thereby solving all problems had by the proposed solutions of the prior art deriving from the use of many component parts to be joined together. In particular, with reference to FIG. 3a and 3b, the batching tap 1 can be produced through a single and suitable die due to the fact that the whole closing member 7 and the related delivering channel 9 can be inserted afterwards inside the securing frame 11, possibly by elastically forcing the stop tooth 19a, and that the hinge connection 5 can be realised as a lamina of the same material of the batching tap 1 joining together without discontinuities the vessel batching device 3 with the closing member 7.

## Claims

1. Batching tap (1), **characterised in that** it comprises a batching vessel (3) communicating with an inside of a vessel adapted to contain a granulated or powdery substance and connected through a hinge connection (5) to a closing member (7), said closing member (7) being integral with a delivering channel (9) communicating with said batching vessel (3), said closing member (7) being adapted to rotate around said hinge connection (5) in order to be alternatively brought in a delivering position in which said delivering channel (9) communicates said batching vessel (3) with the outside of said vessel, or in a closing position in which said delivering channel (9) is not communicating with the outside of said vessel and said closing member (7) insulates the interior of said vessel from the exterior.

2. Batching tap (1) according to claim 1, **characterised in that** said hinge connection (5) is at least one lamina made of elastic material.

3. Batching tap (1) according to claim 1, **characterised in that** said batching vessel (3) is connected to a securing frame (11) by interposing at least one slit (13) communicating said batching vessel (3) with the interior of said vessel.

4. Batching tap (1) according to claim 3, **characterised in that** said closing member (7) is hinged to a first side (11a) of said securing frame (11) by interposing said hinge connection (5) .

5. Batching tap (1) according to claim 1, **characterised in that** said delivering channel (9) is defined by a longitudinal rear bulkhead (9a), by a front bulkhead (9d) and by a pair of side bulkheads (9e) laterally connected to said longitudinal rear bulkhead (9a) and to said front bulkhead (9d), said delivering channel (9) being equipped in two of its opposite ends with at least one delivering opening (9c) communicating with the exterior when said batching tap (1) is in said delivering position and with at least one lower inlet opening (9b) communicating with said batching vessel (3).

6. Batching tap (1) according to claim 1, **characterised in that** said batching vessel (3) is internally equipped with sliding guides (17) of said delivering channel (9).

7. Batching tap (1) according to claim 5, **characterised in that** said front bulkhead (9d) is equipped with at least one stop tooth (19a) adapted to about against a limit device (19b) along a front wall (3a) of said batching vessel (3).

8. Batching tap (1) according to claim 1, **characterised in that** said closing member (7) is equipped with a raised edge (7a).

9. Batching tap (1) according to claim 3, **characterised in that** said securing frame (11) is equipped with a securing recess (11c) adapted to house a side wall of said vessel.

10. Batching tap (1) according to any one of the previous claims, **characterised in that** it is composed of a single material.

11. Batching tap (1) according to claim 10, **characterised in that** it is adapted to be manufactured in a single piece.
